# DEMANDE DE BREVET EUROPEEN

(11) **EP 1 229 348 A1**
(43) Date de publication de la demande: **07.08.2002**
(21) Numéro de dépôt: 02290186.2
(22) Date de dépôt: 28.01.2002
(51) Int. Cl.: G01S 13/95, G01S 7/298, G01S 7/292

(54) **Procédé de détection et de caractérisation d'obstacles par un système radar**

(30) Priorité: 30.01.2001 FR 0101221
(71) Demandeur: METEO-FRANCE, 75340 Paris Cédex 07 (FR)
(72) Inventeur: Parent du Chatelet, Jacques, 75015 Paris (FR); Roquain, Patrick, 78440 Issou (FR)
(74) Mandataire: Lavialle, Bruno

(57) **Abrégé**

L'invention concerne un procédé de détection d'obstacles par au moins un système radar agencé pour émettre des impulsions et pour, lorsqu'une impulsion est réfléchie par au moins un obstacle, fournir un signal numérique comportant une suite de niveaux d'intensité correspondant chacun à au moins un azimut et une distance au système radar, le procédé comprenant les étapes de calculer des écarts-types correspondant aux niveaux d'intensité, réaliser une représentation géographique des niveaux d'intensité, et réaliser une représentation géographique des écarts-types correspondant aux niveaux d'intensité.

L'invention a également pour objet un procédé de caractérisation d'un obstacle détecté au moyen du procédé du type ci-dessus.

## Description

La présente invention concerne un procédé de détection d'obstacles, en particulier des phénomènes météorologiques comme des précipitations, au moyen d'un système radar. L'invention a également pour objet un procédé de caractérisation d'un obstacle détecté au moyen d'un procédé de détection de ce type.

Les procédés de détection de ce type ont pour but la réalisation d'une représentation des précipitations dans une grille cartésienne pour constituer par exemple une image qui peut être affichée en superposition à une carte géographique.

Les systèmes radar utilisés pour la mise en oeuvre de tels procédés comprennent généralement une antenne pivotante agencée pour émettre à intervalles réguliers des ondes électromagnétiques sous la forme d'une impulsion de durée déterminée. Les impulsions étant émises pendant la rotation de l'antenne, elles sont émises selon des directions différentes (formant un angle appelé azimut avec une direction de référence) de manière à balayer toute la zone entourant le système radar.

Lorsqu'une impulsion rencontre un obstacle, tout ou partie de l'impulsion est renvoyé vers l'antenne sous la forme d'une onde réfléchie qui est captée par l'antenne et transformée par le système radar en un signal numérique comportant une suite de niveaux d'intensité de l'onde réfléchie. Chaque niveau d'intensité peut être associé à l'azimut de l'impulsion et à une distance au système radar qui est égale à la moitié de la distance que peut parcourir une onde électromagnétique pendant la durée comprise entre le début de l'émission de l'impulsion et le début de la réception de la partie de l'onde réfléchie correspondant à la valeur en question.

Dans les procédés de type connu, des suites de niveaux d'intensité correspondant à plusieurs impulsions successives sont ensuite groupées et des moyennes sont calculées pour obtenir un signal équivalent.

Dans le même temps, dans le cas des radars météorologiques, un calculateur extrait de ce signal des écarts-types qui sont utilisés pour élaborer un signal de correction qui est additionné au signal équivalent afin d'éliminer les parties de ce signal équivalent qui correspondent à des échos fixes qui ne sont pas de nature météorologique (on sait en effet que les reliefs naturels ou artificiels étant fixes, ils correspondent toujours à des cellules pour lesquelles l'intensité va peu varier de sorte que l'écart-type correspondant est faible alors que les phénomènes météorologiques sont variables de sorte que l'intensité au niveau des cellules traversées par de tels phénomènes varie de façon aléatoire et l'écart-type est plus élevé pour celles-ci). Il est ainsi obtenu un signal corrigé constitué d'une suite de niveaux d'intensité corrigés qui sont représentatifs d'échos variables tels que les précipitations.

L'étape suivante consiste habituellement à projeter les signaux corrigés dans un repère cartésien pour créer une image qui pourra être affichée sur un écran ou imprimée.

Avec les procédés du type connu, la correction du signal avant visualisation entraîne une perte d'informations qui peuvent être utiles pour identifier certains phénomènes météorologiques comme la grêle ou la neige.

Il serait donc intéressant de disposer d'un procédé de détection d'obstacles par radar qui soit simple et permette une détection précise et fiable en particulier des phénomènes météorologiques comme la grêle ou la neige.

A cet effet, on prévoit, selon l'invention, un procédé de détection d'obstacles par au moins un système radar agencé pour émettre des impulsions et pour, lorsqu'une impulsion est réfléchie par au moins un obstacle, fournir un signal numérique comportant une suite de niveaux d'intensité correspondant chacun à au moins un azimut et une distance au système radar, le procédé comprenant les étapes de :
- calculer des écarts-types correspondant aux niveaux d'intensité,
- réaliser une représentation géographique des niveaux d'intensité,
- réaliser une représentation géographique des écarts-types correspondant aux niveaux d'intensité.

La visualisation des représentations des niveaux d'intensité et des écarts-types permet de mieux détecter la nature des échos donc la nature de tous les phénomènes météorologiques. En outre, la comparaison des représentations des niveaux d'intensité et des écarts-types avec une représentation corrigée par élimination des échos fixes permet de vérifier la qualité de cette dernière.

L'invention a également pour objet un procédé de caractérisation d'un obstacle détecté au moyen de ce procédé de détection, le procédé de caractérisation comprenant l'étape de comparer au moins un écart-type d'une zone de la représentation géographique des écarts-types à au moins un seuil prédéterminé et, en particulier, le seuil prédéterminé est sensiblement égal à un écart-type minimal correspondant à une chute de grêle, le procédé comprenant alors l'étape de signaler une chute de grêle lorsque l'écart-type relevé dans la zone est supérieur ou égal au seuil prédéterminé, ou le seuil prédéterminé est sensiblement égal à un écart-type maximal correspondant à une chute de neige, le procédé comprenant alors l'étape de signaler une chute de neige lorsque l'écart-type relevé dans la zone est inférieur ou égal au seuil prédéterminé.

D'autres caractéristiques et avantages de l'invention ressortiront à la lecture de la description qui suit d'un mode de mise en oeuvre particulier non limitatif de l'invention.

Il sera fait référence aux dessins annexés, parmi lesquels :

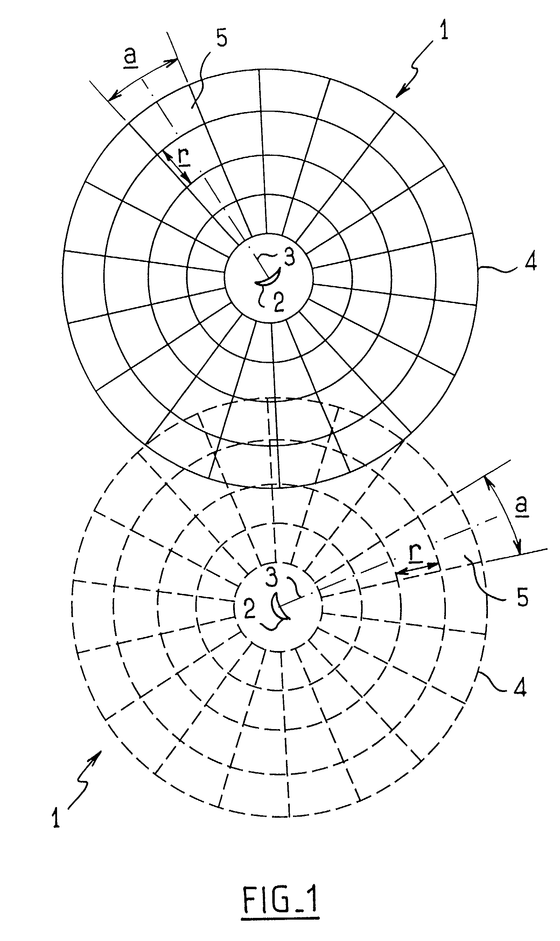

- la figure 1 est une vue schématique de la couverture géographique de systèmes radars utilisés pour la mise en oeuvre du procédé conforme à l'invention,

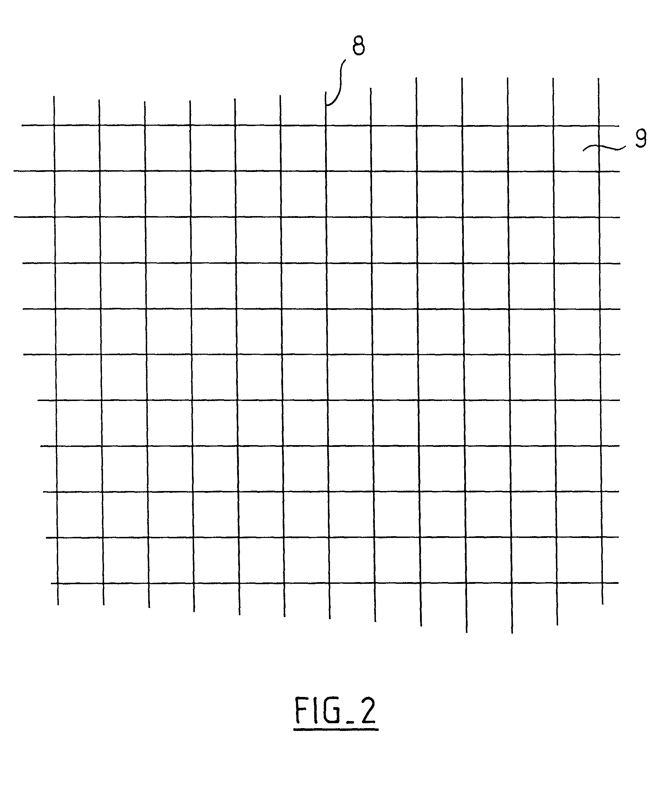

- la figure 2 est une vue schématique de la grille de projection utilisée pour les représentations élaborées avec le procédé de l'invention,

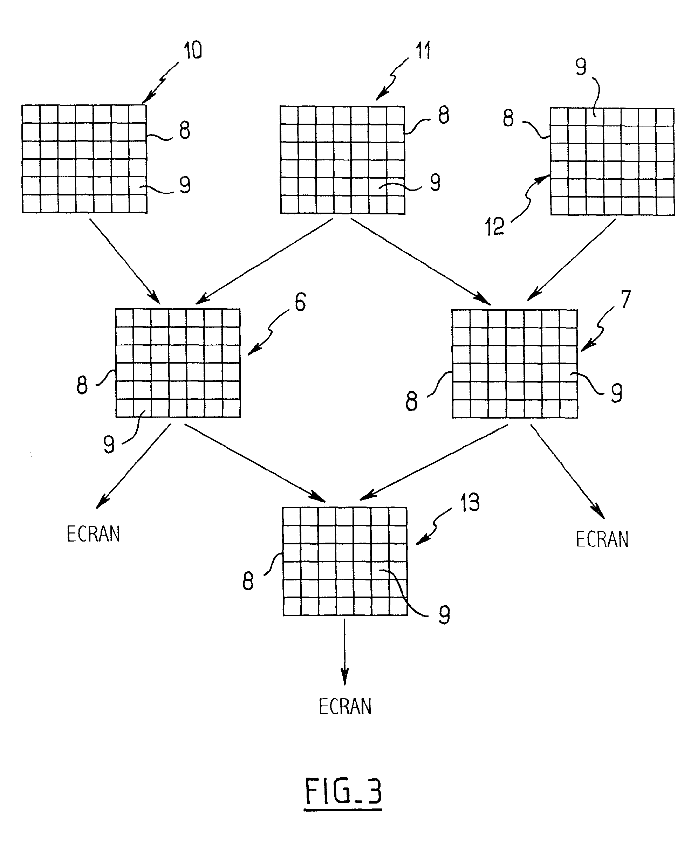

- la figure 3 est une vue schématique des représentations utilisées dans le procédé de l'invention.

Le procédé de détection conforme à l'invention est mis en oeuvre au moyen d'au moins un système radar. En l'espèce, l'invention est décrite en relation avec plusieurs systèmes radar généralement désignés en 1, ici au nombre de deux, et un plus grand nombre de ces systèmes peut être utilisé.

Chaque système radar comprend une antenne 2 qui est agencée de manière connue en soi pour émettre des ondes électromagnétiques sous la forme d'impulsions de durée déterminée. Généralement, les impulsions ont une durée de 2 µs et les impulsions sont espacées d'une durée de 3 ms pour une portée du système radar de 450 km ou de 4 ms pour une portée de 600 km.

L'antenne pivote pendant l'émission des impulsions de sorte que les impulsions sont émises dans des directions 3 formant, avec une direction de référence, des angles différents appelés azimuts. Il est donc possible d'associer au système radar un repère polaire centré sur le système radar et une grille polaire 4 basée sur ce repère polaire et divisée en cellules 5 ayant un pas radial r sensiblement égal à, au minimum, une distance parcourue par l'impulsion pendant la moitié de la durée déterminée (ce qui équivaut au pouvoir séparateur en distance du système radar, ou résolution en distance) et un pas angulaire a sensiblement égal à l'angle séparant les directions d'émission 3 de deux impulsions successives. On remarquera qu'on considère ici que l'angle formé par la direction 3 avec l'horizontale, appelé angle de site, est constant. L'invention s'applique également aux systèmes radars dits multi-sites qui font varier l'angle de site d'un tour à l'autre de l'antenne ou qui émettent des impulsions selon plusieurs angles de site simultanément pour obtenir une couverture de l'espace environnant le système radar et former une représentation en trois dimensions.

L'antenne 2 est également agencée de manière connue en soi pour recevoir des ondes électromagnétiques correspondant à une partie de l'impulsion qui est réfléchie par des obstacles constitués par exemple par des reliefs naturels tels que des montagnes, des reliefs artificiels tels que des immeubles, des phénomènes météorologiques tels que des précipitations comme la pluie, la grêle et autres. Ces ondes électromagnétiques réfléchies sont fournies par le système radar sous la forme d'au moins un signal numérique comportant au moins une suite de valeurs représentatives d'une caractéristique radar ici l'intensité des ondes reçues. Chaque valeur est ici un niveau d'intensité d'une partie de l'onde électromagnétique réfléchie et correspond à un azimut et une distance au système radar et plus particulièrement ici à une cellule 5 de la grille polaire 4. Une fois représentées dans une image radar, ces valeurs seront appelées échos et seront représentatives d'un obstacle.

Le procédé de détection d'obstacles conforme à l'invention comprend l'étape préalable de calculer, de manière connue en elle-même, des écarts-types correspondant aux niveaux d'intensité du signal numérique. Ces écarts-types seront utilisés par la suite pour distinguer les échos fixes, correspondant à une onde réfléchie par un relief naturel ou artificiel, des échos variables, correspondant à une onde réfléchie notamment par les précipitations.

Le procédé comprend ensuite l'étape d'élaborer une représentation 6 des niveaux d'intensité et l'étape d'élaborer une représentation 7 des écarts-types correspondant aux niveaux d'intensité.

Les représentations sont basées sur une grille 8 associée ici à un repère cartésien et divisée en cellules 9. La grille 8 est à une échelle telle que les cellules 9 sont carrées et ont des côtés correspondant à une longueur supérieure ou égale à la résolution en distance du système radar, par exemple 1 km. Les grilles de chaque représentation se présentent par exemple sous la forme de matrices exploitables par un système informatique. Le repère utilisé est cartésien car il est ainsi plus facilement exploitable par les utilisateurs du procédé mais le repère peut être de tout type et notamment polaire centré sur une origine ne correspondant pas au système radar. En outre, dans le cas d'une application aux systèmes radars multi-sites, le repère et la grille peuvent être tridimensionnels. Dans le procédé de l'invention, la grille 8 est avantageusement commune aux deux systèmes radars considérés. On peut également avoir une grille 8 pour chaque système radar mais il sera alors nécessaire d'assembler les unes aux autres les grilles 8 correspondant aux systèmes radars pour obtenir une représentation globale.

L'établissement de la représentation 6 comprend une phase d'affecter chaque niveau d'intensité à une cellule correspondante 9 de la grille 8 pour former une représentation 10 des niveaux d'intensité dans laquelle chaque cellule 9 contient la somme des niveaux d'intensité qui lui ont été affectés. L'affectation est réalisée en calculant, pour chaque niveau d'intensité, les coordonnées, dans le repère cartésien de la grille 8, du centre de la cellule 5 correspondant au niveau d'intensité en question et en ajoutant ce niveau d'intensité aux niveaux d'intensité déjà contenus dans la cellule 9 correspondant aux coordonnées du centre de la cellule 5. L'affectation est donc une opération relativement simple.

Il est parallèlement réalisé une représentation 11 du nombre de niveaux d'intensité affectés à chaque cellule 9. La représentation 11 est basée sur une grille 8 dont chaque cellule 9 contient le nombre de niveaux d'intensité affectés à cette cellule, ce nombre étant incrémenté à chaque nouvelle affectation.

Ces deux représentations 10 et 11 sont ensuite mises en relation pour calculer la moyenne des niveaux d'intensité affectés à chaque cellule 9 afin d'obtenir la représentation 6 dont chaque cellule 9 contient la moyenne des niveaux d'intensité qui lui ont été affectés.

L'établissement de la représentation 7 comprend une phase d'affecter chaque écart-type correspondant à un niveau d'intensité à une cellule correspondante 9 de la grille 8 pour former une représentation 12 des écarts-types dans laquelle chaque cellule 9 contient la somme des écarts-types qui lui ont été affectés. L'affectation est réalisée en calculant, pour chaque écart-type, les coordonnées, dans le repère cartésien de la grille 8, du centre de la cellule 5 correspondant à l'écart-type en question et en ajoutant cet écart-type aux écarts-types déjà contenus dans la cellule 9 correspondant aux coordonnées du centre de la cellule 5.

Les représentations 12 et 11 sont ensuite mises en relation pour calculer la moyenne des écarts-types affectés à chaque cellule 9 afin d'obtenir la représentation 7 dont chaque cellule 9 contient la moyenne des écarts-types qui lui ont été affectés.

Les représentations 6 et 7 peuvent être affichés sur un écran ou imprimées puis être utilisées telles qu'elles pour localiser les phénomènes météorologiques.

Le procédé conforme à l'invention comprend ici l'étape ultérieure d'élaborer une représentation 13 des niveaux d'intensités sans écho fixe. La représentation 13 est comme précédemment basée sur une grille 8 et est obtenue par la mise en relation des représentations 6 et 7 afin d'obtenir par comparaison une élimination des échos fixes. Le principe d'élimination des échos fixes est connu en lui-même et repose sur la constatation que les cellules correspondant à des échos fixes ont un écart-type inférieur à un seuil prédéterminé alors que les cellules correspondant à des échos variables ont un écart-type supérieur à ce seuil. Appliqué au procédé conforme à l'invention, ce principe aboutit à diminuer le niveau d'intensité de chaque cellule 9 de la représentation 6 d'une valeur dépendant de l'écart-type contenu dans la cellule correspondante de la représentation 7. On obtient ainsi la représentation 13 correspondant à la représentation 6 corrigée.

On notera qu'il existe, lors de ce filtrage des échos fixes, un risque que des échos correspondant à des phénomènes météorologiques de faible intensité soient atténués. La visualisation des représentations 6, 7 et 13 permet de vérifier directement la qualité de cette dernière.

Les représentations 6, 7 et 13 peuvent être utilisées sous forme d'images par l'intermédiaire d'un écran vidéo par exemple, l'intensité lumineuse des cellules 9 ou leur couleur étant fonction du niveau d'intensité ou de l'écart-type qui leur est associé. Les représentations 6, 7 ou 13 peuvent être construites à partir d'un seul ou de plusieurs tours d'antenne. Les grilles 8 correspondant aux représentations 6, 7, 10, 11, 12, 13 utilisées dans le procédé de l'invention sont remises à zéro au début de l'élaboration de chaque représentation 6, 7 et 13.

La projection directe des suites de valeurs des signaux numériques dans la grille 8 avant la réalisation d'un traitement de celles-ci permet d'obtenir des représentations précises et fidèles, à la projection près, aux signaux numériques radar, limitant ainsi une atténuation des échos, ainsi qu'un décalage et un étalement de ceux-ci, qui se produisent dans les procédés antérieurs dans lesquels des groupements de valeurs par cellules polaires sont réalisés avant de les traiter puis de les projeter.

De plus, les variations de la vitesse de rotation de l'antenne n'ont pratiquement aucune incidence sur ce mode d'élaboration des représentations, ce qui permet de s'affranchir des inconvénients liés à de telles variations comme les oscillations de localisation et d'intensité, en particulier des échos fixes, qui surviennent avec les procédés de l'art antérieur. Il en est de même de la durée des impulsions et de leur espacement qui n'influent pas sur le mode d'élaboration des représentations.

En outre, le procédé peut être mis en oeuvre par un programme informatique ayant une structure simple rendant sa maintenance aisée. Ce programme est par exemple exécuté par un ordinateur associé aux systèmes radars.

Par ailleurs, il est possible en utilisant les représentations 6 et 7 de caractériser de manière précise les obstacles détectés par le système radar.

Cette caractérisation est réalisée en comparant l'écart-type d'une zone à caractériser de la représentation 7 et au moins un seuil prédéterminé.

Un premier seuil prédéterminé peut être sensiblement égal à un écart-type minimal correspondant à une chute de grêle. Le seuil prédéterminé est alors par exemple sensiblement égal au double d'un écart-type correspondant à une averse de pluie.

Si l'écart-type de la zone à caractériser est supérieur ou égal à ce seuil, il correspond à l'hypothèse d'une chute de grêle dans cette zone.

Il est possible d'affiner la caractérisation à partir d'une vérification du niveau d'intensité de la zone correspondante de la représentation 6. Si l'intensité dans cette zone est élevée, c'est-à-dire supérieure à l'intensité maximale d'une averse de pluie, l'hypothèse d'une chute de grêle est confirmée.

Pour une meilleure précision, il est également possible de vérifier l'étendue de la zone à partir de la représentation 6 : une chute de grêle étant généralement très localisée, une faible étendue confirme l'hypothèse d'une chute de grêle.

Un deuxième seuil prédéterminé peut être sensiblement égal à un écart-type maximal correspondant à une chute de neige.

Si l'écart-type de la zone à caractériser est inférieur ou égal à ce seuil, il correspond à une hypothèse de chute de neige dans cette zone.

La vérification du niveau d'intensité de la zone correspondante de la représentation 6, l'intensité correspondant à une chute de neige étant faible par rapport à celle d'une averse de pluie, et la vérification de l'étendue de cette zone, une chute de neige couvrant en général une large étendue, permettent d'obtenir une meilleure précision de la caractérisation.

Ce procédé de caractérisation peut être mis en oeuvre de manière automatique par des moyens informatiques ou de manière semi-automatique.

Bien entendu, l'invention n'est pas limitée au mode de mise en oeuvre décrit mais englobe toute variante comprise dans le cadre de l'invention tel que défini par les revendications.

En particulier, le procédé conforme à l'invention est utilisable en relation avec d'autres caractéristiques radars comme une fréquence DOPPLER ou des paramètres associés à un système double polarisation (Z_{H}, Z_{V}, Kdp, ϕdp...).

En outre, en variante, on peut prévoir de tenir compte de champs d'advection pour corriger l'image finale des mouvements de cellules pluvieuses qui ont lieu durant la durée d'un tour d'antenne. Ceci en associant à des cellules 9 de la grille 8 ou à des groupes de cellules 9 des vecteurs vitesse de déplacement des échos associés. Les vecteurs vitesse de déplacement sont déterminés de façon connue en elle-même par comparaison de deux représentations antérieures espacées d'une durée déterminée. Dans ce cas, par exemple lorsqu'une représentation est réalisée à la fin de chaque tour d'antenne, au moment de l'affectation d'une valeur dans une cellule 9, le vecteur vitesse de déplacement associé à cette cellule est pris en compte pour déterminer à quelle cellule 9 correspondra cette valeur à la fin du tour d'antenne et la valeur est affectée à cette dernière cellule. Il est également possible d'effectuer une représentation à caractère prédictif pour un utilisateur donné en prenant en compte, au moment de l'affectation des valeurs dans les cellules 9, le vecteur vitesse de déplacement associé à ces cellules pour déterminer à quelles cellules 9 correspondront les valeurs au moment où l'utilisateur disposera de l'image afin d'affecter ces valeurs aux cellules ainsi déterminées.

## Revendications

1. Procédé de détection d'obstacles par au moins un système radar (1) agencé pour émettre des impulsions et pour, lorsqu'une impulsion est réfléchie par au moins un obstacle, fournir un signal numérique comportant une suite de niveaux d'intensité correspondant chacun à au moins un azimut et une distance au système radar, **caractérisé en ce que** le procédé comprend en outre les étapes de :
- calculer des écarts-types correspondant aux niveaux d'intensité,
- réaliser une représentation géographique (6) des niveaux d'intensité,
- réaliser une représentation géographique (7) des écarts-types correspondant aux niveaux d'intensité.

2. Procédé selon la revendication 1, **caractérisé en ce qu'**il comprend une étape ultérieure de filtrer des échos fixes par comparaison de la représentation géographique des niveaux d'intensités et de la représentation géographique des écarts types fixes pour élaborer une représentation géographique (13) des niveaux d'intensités filtrés.

3. Procédé selon la revendication 1 ou la revendication 2, **caractérisé en ce que** le système radar (1) est associé à un repère polaire centré sur le système radar, **en ce que** la représentation des niveaux d'intensité (6) et la représentation des écarts-types (7) sont réalisées chacune dans une grille de projection (8) selon un repère différent du repère polaire du système radar, et **en ce que** l'établissement de chaque représentation comprend une phase d'affecter chaque valeur concernée à une cellule correspondante (9) de la grille de projection et une phase de calculer une moyenne des valeurs affectées à chaque cellule.

4. Procédé selon la revendication 3, **caractérisé en ce que**, l'impulsion ayant une durée déterminée et étant émise selon une direction déterminée, une grille polaire (4) est associée au repère polaire du système radar et divisée en cellules (5) ayant un pas radial (r) sensiblement égal à au moins la moitié d'une distance parcourue par l'impulsion pendant la durée déterminée et un pas angulaire (a) sensiblement égal au décalage angulaire entre deux impulsions successives de sorte qu'à chaque valeur correspond une cellule de la grille polaire, et **en ce que** la cellule correspondante (9) de la grille de projection (8) est déterminée par calcul de coordonnées d'un centre de la cellule de la grille polaire du système radar dans le repère de la grille de projection.

5. Procédé selon la revendication 3 ou la revendication 4, **caractérisé en ce qu'**il comprend les étapes, pour chaque cellule (9) de la grille de projection (8), d'ajouter les niveaux d'intensités affectés à la cellule, d'ajouter les écart-types correspondants affectés à la cellule et d'effectuer un comptage des niveaux d'intensité et des écart-types affectés à la cellule.

6. Procédé selon l'une quelconque des revendications 3 à 5, **caractérisé en ce que** le repère de projection est un repère de type cartésien.

7. Procédé selon l'une quelconque des revendications 3 à 6, **caractérisé en ce que** la grille de projection (8) est commune à au moins deux systèmes radars (1).

8. Procédé de caractérisation d'un obstacle détecté au moyen du procédé de détection selon l'une quelconque des revendications précédentes, **caractérisé en ce qu'**il comprend l'étape de comparer au moins un écart-type d'une zone de la représentation géographique (7) des écarts-types à au moins un seuil prédéterminé.

9. Procédé selon la revendication 8, **caractérisé en ce que** le seuil prédéterminé est sensiblement égal à un écart-type minimal correspondant à une chute de grêle, le procédé comprenant l'étape de formuler une hypothèse de chute de grêle lorsque l'écart-type relevé dans la zone est supérieur ou égal au seuil prédéterminé.

10. Procédé selon la revendication 9, **caractérisé en ce que** le seuil prédéterminé est sensiblement égal au double d'un écart-type correspondant à une averse de pluie.

11. Procédé selon la revendication 8, **caractérisé en ce que** le seuil prédéterminé est sensiblement égal à un écart-type maximal correspondant à une chute de neige, le procédé comprenant l'étape de formuler une hypothèse de chute de neige lorsque l'écart-type relevé dans la zone est inférieur ou égal au seuil prédéterminé.

12. Procédé selon l'une quelconque des revendications 8 à 11, **caractérisé en ce qu'**il comprend l'étape de vérifier l'intensité de la zone correspondante de la représentation géographique (6) des niveaux d'intensité.

13. Procédé selon l'une quelconque des revendications 8 à 12, **caractérisé en ce qu'**il comprend l'étape de vérifier l'étendue de la zone correspondante de la représentation géographique (6) des niveaux d'intensité.
